# EUROPEAN PATENT APPLICATION

(11) **EP 2 360 452 A2**
(43) Date of publication of application: **24.08.2011**
(21) Application number: 11152814.7
(22) Date of filing: 31.01.2011
(51) Int. Cl.: G01C 23/00, G02B 27/01

(54) **Methods and systems for displaying a symbol representative of an aircraft in flight**

(30) Priority: 11.02.2010 US 704158
(71) Applicant: Honeywell International Inc., Morristown, NJ 07962 (US)
(72) Inventor: Wise, John Anthony, Morristown, NJ 07962-2245 (US); Burgin, Roger W., Morristown, NJ 07962-2245 (US); Pepitone, Dave, Morristown, NJ 07962-2245 (US); Suddreth, John G., Morristown, NJ 07962-2245 (US); Nichols, Troy, Morristown, NJ 07962-2245 (US)
(74) Representative: Buckley, Guy Julian

(57) **Abstract**

Methods and systems are provided for displaying a symbol that is representative of an aircraft in flight. The method includes, but is not limited to, the steps of detecting an attitude of the aircraft and a view direction of an operator of the aircraft, and displaying with a near-to-eye display unit a three-dimensional symbol in an exocentric manner. The three-dimensional symbol is displayed to appear to be oriented in a manner that is representative of the attitude of the aircraft. The three-dimensional symbol is further displayed to rotate in a manner that corresponds with the view direction.

## Description

### TECHNICAL FIELD

The present disclosure generally relates to aircraft, and more particularly relates to displaying a symbol representative of the aircraft in flight.

### BACKGROUND

Operators of modem aircraft are presented with a wide variety of information by various onboard systems while their aircraft is in flight. One such onboard system displays a symbol on a display screen that is representative of the aircraft ("the aircraft symbol") and is sometimes referred to as a military velocity vector or a flight path vector. In some current systems, the aircraft symbol is a circle having a bottom thirty degree arc blanked out and three lines protruding from the circle to represent the aircraft's tail fin and wings. In this manner, the aircraft symbol resembles an aircraft when viewed from a position directly behind the aircraft (the "rear view").

Some operators of aircraft utilize a near-to-eye display unit while in flight to receive some or all of information from the various onboard systems. A near-to-eye display unit is a display unit configured to be worn on an operator's head that includes a relatively small display screen to be positioned in front of one or both eyes of the operator. In some examples, the near-to-eye display unit displays the aircraft symbol on the display screen. In many cases, current near-to-eye units display the aircraft symbol only from a rear view, regardless of the aircraft's attitude or the view direction of the operator. As used herein, the term "attitude" refers to the roll, pitch, and yaw of the aircraft with respect to the earth. The term "view direction" refers to a direction that the operator's head is facing with respect to the longitudinal axis of the aircraft. Accordingly, an operator wearing a current near-to-eye display unit and facing straight ahead (i.e., having a forward view direction) while the aircraft is in level flight will be presented with an aircraft symbol that appears identical to an aircraft symbol presented to an operator of an aircraft in a steep climb at a sharp bank while looking backwards - specifically, both operators will see the rear view. Although the aforementioned display units adequately present aircraft information to operators in most situations, they may be improved.

Accordingly, it is desirable to have a display unit that is configured to present onboard system information in an improved manner that is more quickly and more easily assimilated by the aircraft operator. Furthermore, other desirable features and characteristics of the present invention will become apparent from the subsequent detailed description of the invention and the appended claims, taken in conjunction with the accompanying drawings and this background of the invention.

### BRIEF SUMMARY

Various non-limiting embodiments of systems and methods for displaying a symbol that are representative of an aircraft in flight are disclosed herein.

In an embodiment, by way of example only, a method includes, but is not limited to the steps of detecting an attitude of the aircraft and a view direction of an operator of the aircraft, and displaying, with a near-to-eye display unit, a three-dimensional symbol in an exocentric manner. The three-dimensional symbol is displayed so that it appears to be oriented in a manner that is representative of the attitude of the aircraft. Furthermore, the three-dimensional symbol is displayed so that it rotates in a manner that corresponds with the view direction.

In another embodiment, by way of example only, a system includes, but is not limited to, a near-to-eye display unit having a display screen. The system also includes an attitude detection unit that is configured to determine an attitude of the aircraft. The system still further includes a processor that is communicatively connected to the near-to-eye display unit and to the attitude detection unit. The processor is configured to obtain the attitude of the aircraft from the attitude detection unit and to provide commands to the near-to-eye display unit to display a three-dimensional symbol in an exocentric manner on the display screen such that the three-dimensional symbol appears to be oriented in a manner that is representative of the attitude of the aircraft.

In still another embodiment, by way of example only, the system includes, but is not limited to, a near-to-eye display unit having a display screen. The near-to-eye display unit is configured to determine a view direction of an operator of the aircraft. The system further includes an attitude detection unit that is configured to determine an attitude of the aircraft. The system still further includes a processor that is communicatively connected to the near-to-eye display unit and to the attitude detection unit. The processor is configured to obtain the attitude of the aircraft from the attitude detection unit and to obtain the view direction from the near-to-eye display unit. The processor is further configured to provide commands to the near-to-eye unit to display a three-dimensional symbol in an exocentric manner on the display screen such that the three-dimensional symbol appears to be oriented in a manner that is representative of the attitude of the aircraft and such that the three-dimensional symbol rotates in a manner that corresponds with the view direction.

### BRIEF DESCRIPTION OF THE DRAWINGS

The present invention will hereinafter be described in conjunction with the following drawing figures, wherein like numerals denote like elements, and

FIG. 1 is a schematic of a system for displaying a three-dimensional symbol representative of an aircraft in flight, according to an embodiment;

FIG. 2 is a simplified, rear view of an aircraft and an expanded view of images presented to an operator on a display screen corresponding to a view direction of the operator and an orientation of the aircraft, according to an embodiment;

FIG. 3 is a simplified, side view of an aircraft and an expanded view of images presented to an operator on a display screen corresponding to the view direction of the operator and an alternate orientation of the aircraft, according to an embodiment;

FIG. 4 is a simplified, rear view of an aircraft and an expanded view of images presented to an operator on a display screen corresponding to the view direction of the operator and an alternate orientation of the aircraft, according to an embodiment;

FIG. 5 is a simplified view from above an aircraft and an expanded view of images presented to an operator on a display screen corresponding to the view direction of the operator and an alternate orientation of the aircraft, according to an embodiment;

FIG. 6 is a simplified, rear view of an aircraft and an expanded view of images presented to an operator on a display screen corresponding to an alternate view direction of the operator and an orientation of the aircraft, according to an embodiment;

FIG. 7 is a simplified, rear view of an aircraft and an expanded view of images presented to an operator on a display screen corresponding to an alternate view direction of the operator and the orientation of the aircraft, according to an embodiment;

FIG. 8 is a simplified, side view of an aircraft and an expanded view of images presented to an operator on a display screen corresponding to an alternate view direction of the operator and the orientation of the aircraft, according to an embodiment;

FIG. 9 is a simplified, side view of an aircraft and an expanded view of images presented to an operator on a display screen corresponding to an alternate view direction of the operator and an alternate orientation of the aircraft, according to an embodiment;

FIG. 10 is a simplified view of images representative of an aircraft in level flight presented to an operator on a display screen and markings that provide the operator with aircraft orientation information;

FIG. 11 is a simplified view of images representative of an aircraft in level flight presented to an operator on a display screen with additional markings to facilitate control of the aircraft;

FIG. 12 is a simplified view of images representative of an aircraft in a banked turn presented to an operator on a display screen and additional markings to facilitate control of the aircraft;

FIG. 13 is a simplified view of images representative of an aircraft flying at different velocities presented to an operator on a display screen; and

FIG. 14 is a flow diagram of a method for displaying a symbol representative of an aircraft in flight, according to an embodiment.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

Improved systems and methods have been provided for use on board an aircraft to display a symbol that is representative of an aircraft in flight to an operator using a near-to-eye display unit. The near-to-eye display unit is configured to detect the view direction of the operator. In an embodiment, the system also includes an attitude detection unit that is configured to determine an attitude of the aircraft. The attitude detection unit is configured to communicate the attitude to a processor. The processor is configured to utilize the attitude of the aircraft to provide commands to the near-to-eye display unit to display a three-dimensional symbol appearing on the display unit ("attitude appearance") to have substantially the same attitude as the aircraft.

For example, if the aircraft is in a forty-five degree bank to the left, the three-dimensional symbol will be rendered as having a forty-five degree left bank. If the aircraft is pitched upward at a forty degree angle, then the three-dimensional symbol will be rendered as having a forty degree upward pitch, and so on. Furthermore, the processor may be configured to command the near-to-eye display unit to change the attitude appearance of the three-dimensional symbol substantially simultaneously with real-time attitude changes of the aircraft. In this manner, the three-dimensional symbol communicates real-time information about the attitude of the aircraft to the operator.

In an embodiment, the near-to-eye display unit is configured to communicate the view direction to the processor. The processor is further configured to utilize the view direction to display the three dimensional symbol in a manner such that, as the head of the operator rotates and/or pivots (which necessarily changes the view direction), the three dimensional symbol rotates and/or pivots in a corresponding manner. In this way, the system is configured to present differing sides of the three dimensional symbol to the operator as the operator's head turns and/or pivots.

In another embodiment, an apparent heading of the three-dimensional symbol remains constant. For example, the three-dimensional symbol may appear to rotate in a direction that is opposite to the direction of rotation of the head of the operator. When the view direction is straight ahead (i.e., the operator's head is facing forward), the system will display a rear view of the three-dimensional symbol. As the operator's head turns counterclockwise, the three-dimensional symbol begins to rotate in a clockwise direction, presenting a portion of its right side to the operator and increasing in view as the operator's head continues to turn to the counterclockwise. At the same time, the visible portion of the rear side of the three-dimensional symbol diminishes. In an embodiment, when the view direction is ninety degrees to the left, the system will display a view of the entire right side of the three-dimensional symbol, and no portion of its rear side will be visible. As the operator's head continues to turn counterclockwise, the three-dimensional symbol continues to turn clockwise. Accordingly, when the operator's head has turned completely to the rear, the system will display a front view of the three-dimensional symbol. As the operator looks up, an underside of the three-dimensional symbol will rotate into view. As the operator looks down, a top side of the three-dimensional symbol will rotate into view.

The processor is further configured to command the near-to-eye display unit to display the three-dimensional symbol in an exocentric manner on the display screen. As used herein, the term "exocentric" refers to a third person perspective, i.e., looking at the three-dimensional symbol from a distance rather than from a point of view originating within three-dimensional symbol. Presenting such an image will resemble formation flying (the closely aligned flight of two or more aircraft) and therefore may be easily comprehended and assimilated by most aircraft operators.

A further understanding of the embodiments of the systems and methods disclosed herein may be obtained through a review of the illustrations accompanying this application together with a review of the detailed description that follows.

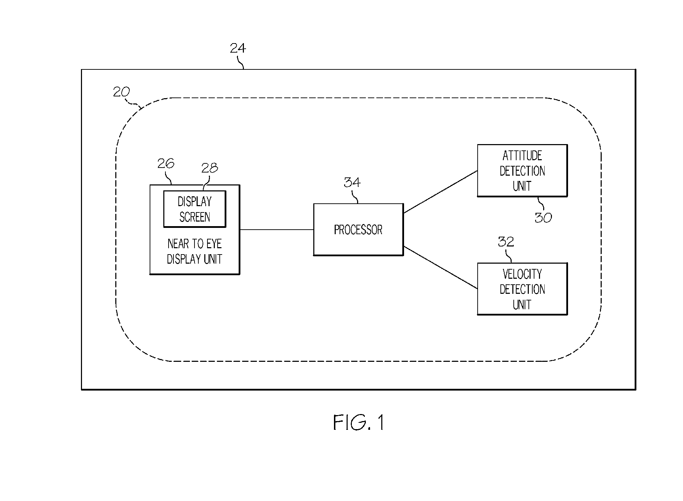

FIG. 1 is a schematic of an embodiment of a system 20 that is configured to display a three-dimensional symbol that is representative of an aircraft 24 in flight. In an embodiment, system 20 includes a near-to-eye display unit 26 having a display screen 28, an attitude detection unit 30, a velocity detection unit 32, and a processor 34. In other embodiments, system 20 may include a greater or lesser number of components. For example, in another embodiment, system 20 may not include velocity detection unit 32. In yet another embodiment, system 20 may include a heading detection unit (not shown) for the purpose of associating heading information with the three-dimensional symbol. In still another embodiment, system 20 may include a communication unit to receive navigation related information that may be associated with the three-dimensional symbol. Although system 20 is discussed and illustrated herein as being utilized by a fixed wing jet aircraft, it should be understood that system 20 may be mounted on any type of aircraft, including fixed wing and rotor aircraft, propeller or jet propelled aircraft, and lighter than air aircraft. Furthermore, system 20 is not limited for use with aircraft, but also may be used with other types of vehicles including water craft and spacecraft.

In an embodiment, near-to-eye display unit 26 is an apparatus that is configured to be worn by an operator 36 of aircraft 24. Near-to-eye display unit 26 may be any head mounted display system for presenting images to a user including an attachment mechanism (e.g. chin strap) for securing to the head of the user, a support mechanism or structure for supporting a display screen 28 or other display apparatus within the user's field of vision, and a mechanism (including any necessary electronics) configured to determine the view direction of operator 36. Near-to-eye display units are well known in the art and exemplary near-to-eye display units are disclosed in U.S. patents nos. RE28,847; 5,003,300; 5,539,422; 5,742,263; and 5,673,059, each of which are hereby incorporated herein in their entirety. Display screen 28 may comprise a visor or monocle incorporated into near-to-eye display unit 26, in an embodiment. In an embodiment of system 20, near-to-eye display unit 26 is configured to display three-dimensional images on display screen 28 such as the three-dimensional symbol. In an embodiment, the three-dimensional symbol is transparent and may have the appearance of hollow wire frames. By providing a transparent image, near-to-eye display unit 26 permits the pilot to see the three-dimensional image without obstructing the pilot's view. Nevertheless, in still other embodiments, the three-dimensional symbol may be rendered as opaque. Additionally, in some embodiments, near-to-eye display unit may also be configured to display images in different colors to permit color coding of the three-dimensional images. Additionally, colored symbology may also flash to indicate aircraft envelope performance exceedances.

Near-to-eye display unit 26 includes display screen 28. Display screen 28 may be any sort or type of display system that is configured to depict three-dimensional graphic images and that is compatible with near-to-eye display unit 26. In some embodiments, it may be desirable for display screen 28 to also be configured to display text. Examples of suitable display systems include, but are not limited to, a flat panel display device, a Liquid Crystal Display (LCD) device, a thin film transistor (TFT) display device, a plasma display device, an electro-luminescent display device, a Light Emitting Diode (LED) display device, a holographic display device, a Micro Mirror Device (MMD) display device, a lens, a projector or the like.

In an embodiment, attitude detection unit 30 may comprise a single apparatus that is configured to determine the attitude of aircraft 24. For example, attitude detection unit 30 may comprise a gyroscope, an inertial navigation system, and an Attitude and Heading Reference System unit (AHRS). In other embodiments, attitude detection unit 30 may comprise multiple apparatuses that cooperate to determine the attitude of aircraft 24. For example, three separate components that are configured, respectively, to determine the roll, pitch and yaw of an aircraft. For example, attitude detection unit may comprise three separate sets of sensors that are configured to monitor the ailerons, the vertical stabilizers and the horizontal stabilizer of aircraft 24. Alternatively, vibrating structure gyroscopes and/or alpha-vane systems may be used to detect the aircraft's alpha angle relative to the horizon (pitch). In an embodiment, attitude detection unit 30 may be configured to detect the attitude of aircraft 24 at regular intervals. In another embodiment, attitude detection unit 30 may be configured to detect changes in attitude. In still another embodiment, attitude detection unit 30 may be configured to both regularly detect the attitude of aircraft 24 and to detect changes in its attitude that occur between individual detection events.

In an embodiment, velocity detection unit 32 is an apparatus or a collection of cooperating apparatuses that are configured to determine the velocity of aircraft 24. For example, velocity detection unit 32 may be an apparatus that is configured to directly measure a speed of aircraft 24 with respect to the air such as an Air Data Computer system that is configured to take inputs directly from a pitot-static sensor system. In other embodiments, velocity detection unit 32 may be an apparatus that is configured to measure a speed of aircraft 24 with respect to the ground, such as a Global Positioning Satellite (GPS) navigation system, an inertial navigation system, or an AHRS. In an embodiment, velocity detection unit 32 may be configured to detect the velocity of aircraft 24 at regular intervals. In another embodiment, velocity detection unit 32 may be configured to detect changes in velocity. In still another embodiment, velocity detection unit 32 may be configured to both regularly detect the velocity of aircraft 24 and to detect changes in its velocity that occur between individual detection events.

In an embodiment, processor 34 may be any type of onboard computer, computer system, or microprocessor that is configured to perform algorithms, to execute software applications, to execute sub-routines and/or to be loaded with and to execute any other type of computer program. Processor 34 may comprise a single processor or a plurality of processors acting in concert, in an embodiment. In some embodiments, processor 34 may be dedicated for use exclusively with system 20 while in other embodiments processor 34 may be shared with other systems onboard aircraft 24. In still other embodiments, processor 34 may be combined with any of the other components of system 20, such as, but not limed to, near-to-eye display unit 26 and/or attitude detection unit 30.

Processor 34 is communicatively connected to near-to-eye display unit 26, attitude detection unit, and velocity detection unit 32, in accordance with an embodiment. Such connection may be effected through the use of any suitable means of transmission including both wired and wireless connections. For example, each component may be physically connected to processor 34 via a coaxial cable or via any other type of wire connection effective to convey electronic signals. In the illustrated embodiment, processor 34 is directly communicatively connected to each of the other components. In other embodiments, each component may be communicatively connected to processor 34 across a vehicle bus. In still other examples, each component may be connected wirelessly to processor 34 via any wireless connection effective to communicate signals between components. Examples of suitable wireless connections include, but are not limited to, a Bluetooth connection, a WiFi connection, an infrared connection or the like.

Being communicatively connected provides a pathway for the transmission of commands, instructions, interrogations, and other signals between processor 34 and each of the other components. Through this communicative connection, processor 34 may control and/or communicate with each of the other components. Each of the other components discussed above are configured to interface and engage with processor 34. For example, in an embodiment, near-to-eye display unit 26 is configured to provide the view direction to processor 34 and to receive commands from processor 34 to display images on display screen 28 in response to such commands. In another embodiment, attitude detection unit 30 may be configured to automatically provide attitude information to processor 34 at regular intervals or whenever a change in attitude is detected or to provide attitude information to processor 34 in response to an interrogation from processor 34. In another embodiment, velocity detection unit 32 is configured to provide velocity information to processor 34 at regular intervals or whenever a change in velocity is detected, or to provide velocity information to processor 34 upon demand in response to an interrogation from processor 34.

In another embodiment, processor 34 is configured to interact with, coordinate with, and/or orchestrate the activities of each of the other components of system 20 for the purpose of displaying three-dimensional symbol 22 to operator 36 while aircraft 24 is in flight. Processor 34 is programmed and/or otherwise configured to obtain attitude information pertaining to aircraft 24 from attitude detection unit 30. Processor 34 is further configured to utilize the attitude information to command near-to-eye display unit 26 to render, generate, or otherwise present, in an exocentric manner, three-dimensional symbol 22 on display screen 28 such that three-dimensional symbol has an attitude that is representative of the attitude of aircraft 24.

In an embodiment, processor 34 is further programmed and/or otherwise configured to obtain the view direction from near-to-eye display unit 26. Processor 34 is further configured to utilize the view direction to command near-to-eye display unit 26 to render, generate, or otherwise rotate three-dimensional symbol in a manner that corresponds with the view direction. In an embodiment, as the head of operator 36 rotates in a counterclockwise direction, three-dimensional symbol rotates in a clockwise direction.

In an embodiment, processor 34 may further be configured to obtain the velocity of aircraft 24 from velocity detection unit 32. Processor 34 is further configured to utilize the velocity to command near-to-eye display unit 26 to render, generate, or otherwise present three-dimensional symbol 22 as having a variable length that corresponds with the velocity of aircraft 24. Accordingly, in an embodiment, the higher the velocity of aircraft 24, the greater the length of three-dimensional symbol 22.

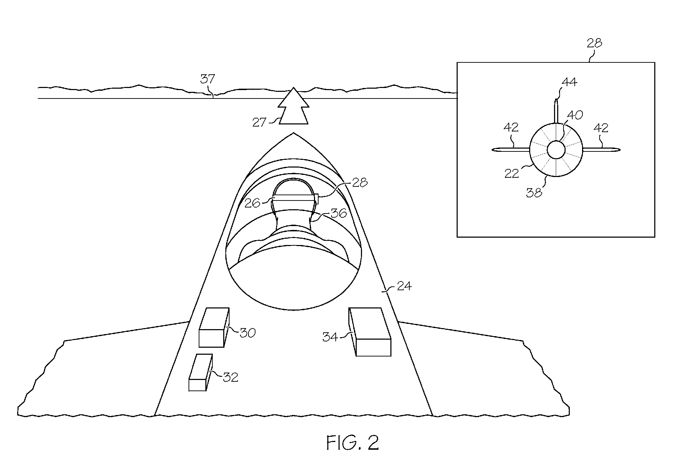

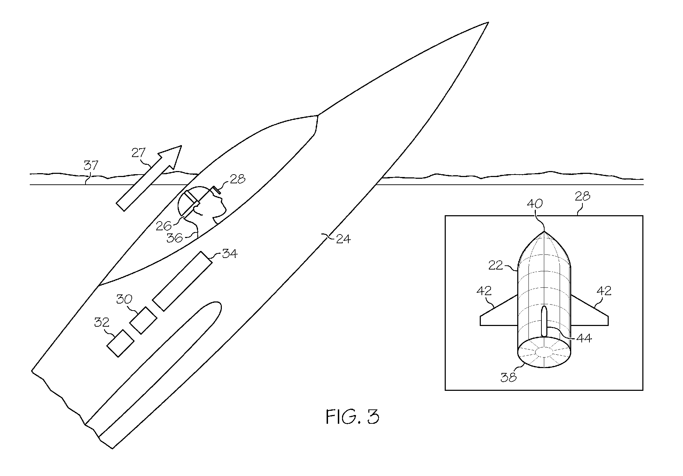

FIG. 2 is a simplified, rear view of aircraft 24 and an expanded view of images presented to operator 36 on display screen 28 corresponding to a view direction of operator 36 and an orientation of 24 aircraft, according to an embodiment. Aircraft 24 includes near-to-eye display unit 26 (worn by operator 36) having display screen 28 positioned in front of an eye of operator 36. Aircraft 24 is further equipped with attitude detection unit 30, velocity detection unit 32 and processor 34. These components are each connected to processor 34 via any suitable wireless connection. Aircraft 24 is illustrated as flying straight and level with respect to horizon 37, i.e., having pitch, roll, and yaw angles of zero degrees. The attitude of aircraft 24 is detected by attitude detection unit 30 and provided to processor 34. Operator 36 is looking straight ahead and a corresponding view direction 27 is detected by near-to-eye display unit 26 which provides the view direction to processor 34. Processor 34 utilizes both the attitude of aircraft 24 and the view direction of operator 36 to provide commands to near-to-eye display unit 26 to present three-dimensional symbol 22 on display screen 28. In FIG. 2 (as well as in FIGS. 3-13) three-dimensional symbol 22 is rendered as a see-through, hollow wire frame object. In other embodiments, three-dimensional symbol 22 may be transparent or opaque. In some embodiments, system 20 may include an input unit which permits operator 36 to switch between these and other rendering formats, and/or to turn three-dimensional symbol 22 off entirely.

As noted previously, FIG. 2 also includes an expanded view of display screen 28 showing three-dimensional symbol 22. Three-dimensional symbol 22 resembles an aircraft and has a rear end 38, a front end 40, a pair of wings 42 and a tail fin 44. In other examples, three-dimensional symbol 22 may have any suitable shape and/or appearance. Because aircraft 24 has a pitch, roll, and yaw of zero degrees, three-dimensional symbol 22 is illustrated with rear end disposed directly behind front end 40 and with wings 42 oriented horizontally. Additionally, because operator 36 has a forward view direction, three-dimensional symbol 22 will be illustrated without any degree of rotation and operator 36 will be presented with a view of the rear portion of three-dimensional symbol 22.

FIG. 3 is a simplified, side view of aircraft 24 and an expanded view of images presented to an operator on a display screen 28 corresponding to view direction 27 of operator 36 and an alternate orientation of aircraft 24, according to an embodiment. Here, aircraft 24 is in a climb of approximately forty-five degrees while operator 36 continues to look in the forward view direction. The corresponding view direction 27 is reported to processor 34 by near-to-eye display unit 26. The roll and yaw angles of aircraft 24 remain at zero degrees, while the pitch angle of aircraft 24 has changed between FIG. 2 and FIG. 3. Accordingly, a new attitude is detected by attitude detection unit 30 and communicated to processor 34 in the manner discussed above. Processor 34 utilizes this new attitude information to provide additional commands to near-to-eye display unit 26 to revise the image of three-dimensional symbol 22 to reflect the new attitude of aircraft 24. As illustrated in expanded display screen 28, operator 36 is still presented with a rear view of three-dimensional symbol 22, but now three-dimensional symbol 22 is depicted as being in a steep climb at a pitch of approximately forty-five degrees.

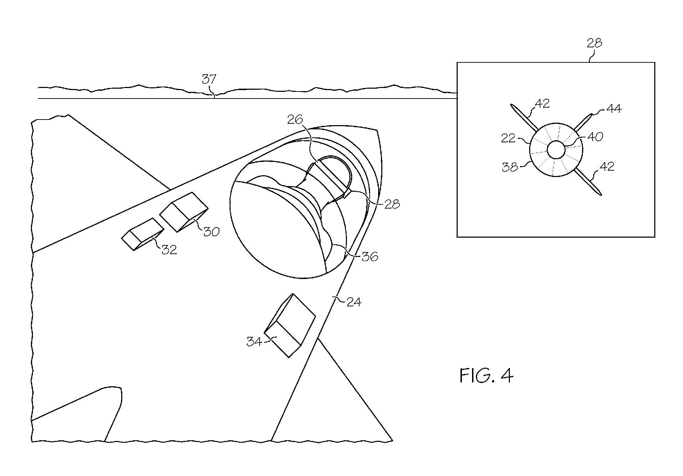

FIG. 4 is a simplified, rear view of aircraft 24 and an expanded view of images presented to operator 36 on display screen 28 corresponding to view direction 27 of operator 36, and an alternate orientation of aircraft 24, according to an embodiment. Here, aircraft 24 is banked to the right at a roll angle of approximately forty-five degrees, while operator 36 faces is looking straight ahead. The corresponding view direction 27 is reported to processor 34 by near-to-eye display unit 26. The pitch and the yaw angles of aircraft 24 remain at zero degrees, while the roll angle of aircraft 24 has changed from FIG. 2 to FIG. 4. Accordingly, new attitude information is detected by attitude detection unit 30 and communicated to processor 34 in the manner discussed above. Processor 34 utilizes this new attitude information to provide additional commands to near-to-eye display unit 26 to revise the image of three-dimensional symbol 22 to reflect the new attitude of aircraft 24. As illustrated in expanded display screen 28, operator 36 is still presented with a rear view of three-dimensional symbol 22, but now three-dimensional symbol 22 is depicted as being in a roll to the right at an angle of approximately forty five degrees.

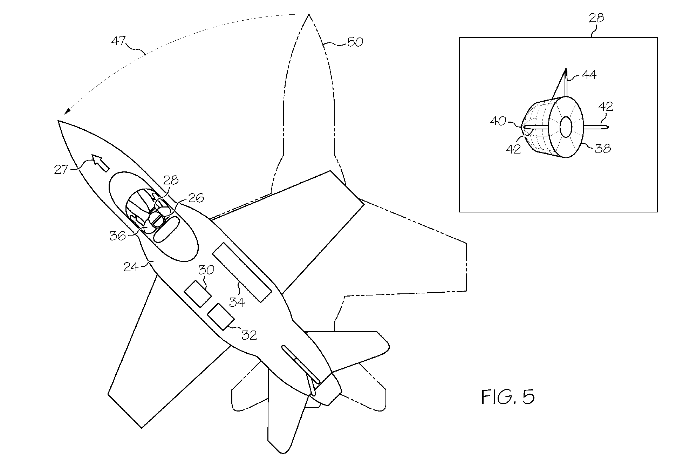

FIG. 5 is a simplified view from above aircraft 24 and an expanded view of images presented to operator 36 on display screen 28 corresponding to view direction 27 of operator 36 and an alternate orientation of aircraft 24, according to an embodiment. Here, aircraft 24 has turned to the left (depicted by dotted arrow 49) at a yaw of approximately forty-five degrees. Phantom lines 50 depict an original orientation of aircraft 24. Operator 36 is looking straight ahead and the corresponding view direction 27 is reported to processor 34 by near-to-eye display unit 26. The pitch and the roll angles of aircraft 24 remain at zero degrees, while the yaw angle of aircraft 24 has changed from FIG. 2 to FIG. 5. A new attitude is detected by attitude detection unit 30 and communicated to processor 34 in the manner discussed above. Processor 34 utilizes this new attitude information to provide additional commands to near-to-eye display unit 26 to revise the image of three-dimensional symbol 22 to reflect the new attitude of aircraft 24. As illustrated in expanded display screen 28, operator 36 is still presented with a rear view of three-dimensional symbol 22, but now three-dimensional symbol 22 is depicted as being in a flat turn to the left at an angle of approximately forty five degrees.

With reference to FIGS. 3-5, changes to pitch, roll, and yaw angles have been illustrated in isolation (i.e., each figure depicts a variation of only a single attitude variable from the orientation depicted in FIG. 2). This has been done for ease of illustration only. It should be understood that the system of FIG. 1 is also capable of generating three-dimensional symbol 22 in a manner that is reflective of variations of more than one attitude variable at a time. Accordingly, if aircraft 24 is simultaneously in a climb (i.e., pitch angle deviating from zero degrees) and a bank (i.e., a roll angle deviating from zero degrees), three-dimensional symbol 22 would be rendered as both climbing and banking. Changes in the yaw of aircraft 24 would also be displayed together with changes in either or both of the other attitude variables.

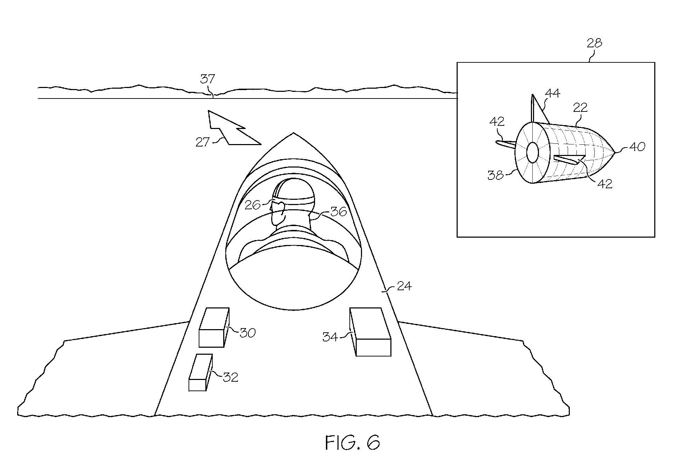

FIGS. 6-8 present illustrations of examples where operator 36 is looking in different directions as aircraft 24 flies straight and level. FIG. 6 is a simplified, rear view of aircraft 24 and an expanded view of images presented to operator 36 on display screen 28 corresponding to an alternate view direction 27 of operator 36 and an orientation of aircraft 24, according to an embodiment. In FIG. 6, aircraft 24 is flying straight and level with respect to horizon 37. The attitude of aircraft 24 is detected by attitude detection unit 30 and provided to processor 34. As illustrated in this figure, operator 36 is looking approximately forty-five degrees to the left. A corresponding view direction 27 is detected by near-to-eye display unit 26 and provided to processor 34. Accordingly, the only change in circumstance between the example illustrated in FIG. 2 and the example illustrated in FIG. 6 is that view direction 27 has changed.

Processor 34 utilizes both the attitude of aircraft 24 and view direction 27 to provide commands to near-to-eye display unit 26 to present three-dimensional symbol 22 on display screen 28 in a manner that is reflective of both the attitude of aircraft 24 and of view direction 27. Because operator 36 has rotated his head in a counterclockwise direction, processor 34 provides commands to near-to-eye display unit 26 to display three-dimensional symbol 22 in a manner that is rotated in a clockwise direction. Thus, as operator 36 turns his head to the left, system 20 will present operator 36 with an image of the right side of three-dimensional symbol 22. Rotating three-dimensional symbol 22 in a direction substantially opposite to the direction of rotation of operator 36's head creates the appearance that three-dimensional symbol 22 has a substantially constant heading and allows operator 36 to readily assimilate the information provided by three-dimensional symbol 22.

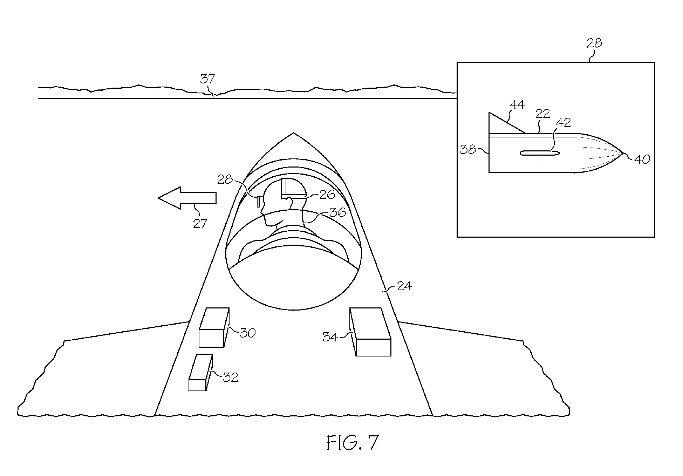

FIG. 7 is a simplified, rear view of aircraft 24 and an expanded view of images presented to operator 36 on display screen 28 corresponding to an alternate view direction 27 of operator 36 and the orientation of aircraft 24, according to an embodiment. In FIG. 7 aircraft 24 is flying straight and level with respect to horizon 37 and operator 36 has turned his head a total of about ninety degrees to his left (i.e. counterclockwise with respect to operator 36). Attitude detection unit 30 detects the attitude of aircraft 24 and reports the attitude to processor 34. Near-to-eye display unit 26 detects view direction 27 and reports view direction 27 to processor 34. Utilizing both the attitude and view direction 27, processor 34 provides commands to near-to-eye display unit 26 to display three-dimensional symbol 22 in a position that is rotated a total of about ninety degrees in a clockwise direction. Accordingly, as operator 36 looks left, system 20 presents the right side of three-dimensional symbol 22 on display screen 28.

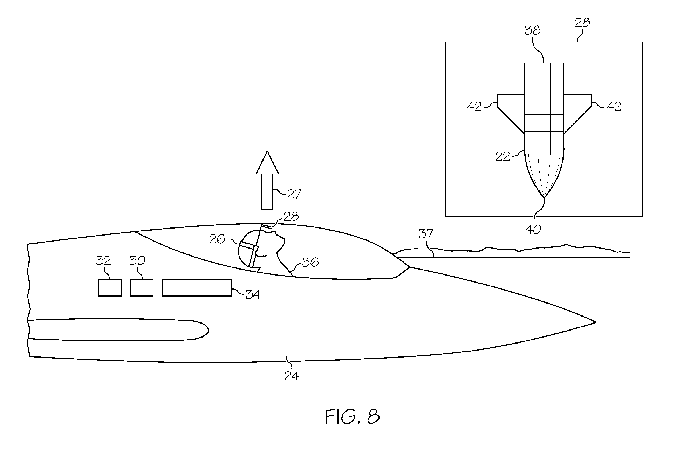

FIG. 8 is a simplified, side view of aircraft 24 and an expanded view of images presented to operator 36 on display screen 28 corresponding to an alternate view direction 27 of operator 36 and the orientation of aircraft 24, according to an embodiment. In FIG. 8, aircraft 24 is flying straight and level and operator 36 has pivoted his head in an upward direction a total of about ninety degrees such that view direction 27 is perpendicular relative to horizon 37. Attitude detection unit 30 detects the attitude of aircraft 24 and reports the attitude to processor 34. Near-to-eye display unit 26 detects view direction 27 and reports view direction 27 to processor 34. Utilizing both the attitude and view direction 27, processor 34 provides commands to near-to-eye display unit 26 to display three-dimensional symbol 22 in a position that is pivoted upward about front end 40 in a clockwise direction a total of ninety degrees. Accordingly, as operator 36 looks up, system 20 presents the under side of three-dimensional symbol 22 on display screen 28.

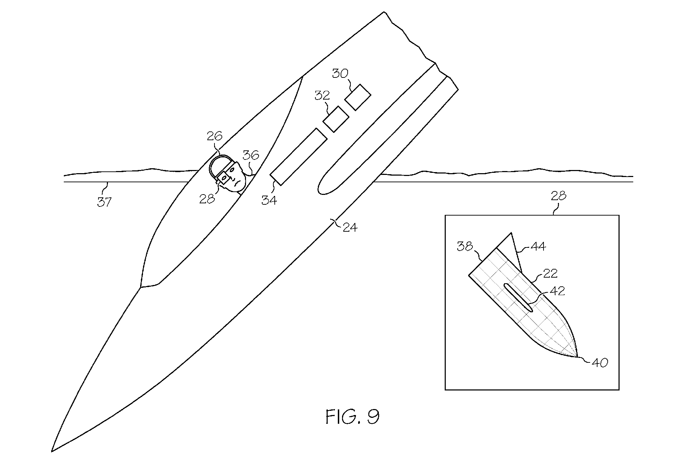

FIG. 9 is a simplified, side view of aircraft 24 and an expanded view of images presented to operator 36 on display screen 28 corresponding to an alternate view direction 27 of operator 36 and an alternate orientation of aircraft 24, according to an embodiment. In FIG. 9, aircraft 24 is maneuvering and operator 36 has turned his head. Aircraft 24 is in a dive having a pitch of approximately forty-five degrees below the horizon. Simultaneously, operator 36 has turned his head in a counterclockwise direction and is looking approximately ninety degrees to his left. Attitude detection unit 30 detects the attitude of aircraft 24 and reports the attitude to processor 34. Near-to-eye display unit 26 detects the view direction and reports the view direction to processor 34. Utilizing both the attitude and the view direction, processor 34 provides commands to near-to-eye display unit 26 to display three-dimensional symbol 22 in a position that is both pitched downward at an approximately forty five degree angle and that is rotated in a clockwise directions approximately ninety degrees such that only the right side of three-dimensional symbol 22 is visible to operator 36. This orientation is illustrated in expanded display screen 28.

FIGS. 2-9, discussed above, illustrate embodiments wherein system 20 is configured to render three dimensional symbol 22 in a manner that is reflective of both changes in the attitude of aircraft 24 and also changes in view direction 27. In other embodiments, system 20 may be configured to render three dimensional symbol 22 in a manner that reflects changes in view direction 27, but not changes in the attitude of aircraft 24. For example, in such an embodiment, if the pilot were maneuvering the aircraft (i.e., rolling, pitching and/or yawing the aircraft), three dimensional symbol 22 would, nevertheless appear to be flying straight and level. However, if the pilot were to turn his head counterclockwise while maneuvering aircraft 24, three dimensional symbol 22 would rotate in a clockwise direction to present the pilot with a side view of three dimensional symbol 22 while otherwise appearing to be flying straight and level. In such embodiments, the pilot of aircraft 24 may obtain attitude information about aircraft 24 from other sources rather than from three dimensional symbol 22.

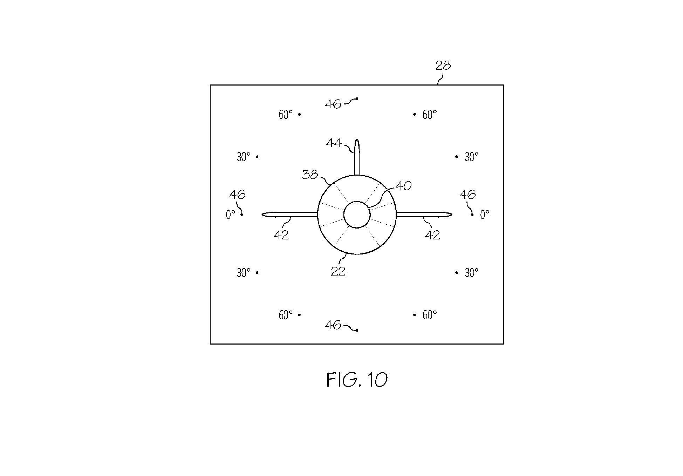

With reference to FIGS. 10-12 and with continuing reference to FIG. 1, the output of another embodiment of system 20 is illustrated. FIG. 10 is a simplified view of images representative of an aircraft 24 in level flight presented to operator 36 on display screen 28 and markings that provide operator 36 with aircraft orientation information. With additional reference to FIG. 1, processor 34 is further configured to provide commands to near-to-eye display unit 26 to display a plurality of indicator markings 46 in close proximity to three-dimensional symbol 22. A rear view of three-dimensional symbol 22 is presented which correlates to operator 36 looking straight ahead as aircraft 24 is in straight and level flight. In some embodiments, as the view direction changes, indicator markings 46 are displayed as lines longitudinally aligned with three-dimensional symbol 22 and arranged to form a cylinder around three-dimensional symbol 22. In FIG. 10, indicator markings 46 are numerically annotated to identify roll angles of three-dimensional symbol 22. Indicator markings 46 are provided in thirty degree increments, in an embodiment. In other embodiments, smaller or larger increments may be provided. Indicator markings 46 permit operator 36 to ascertain the degree to which aircraft 24 has rolled in response to rudder inputs without having to glance at an instrument.

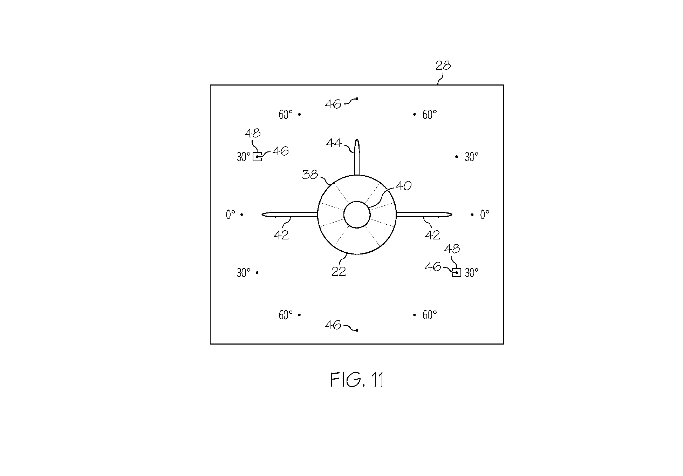

FIG. 11 is a simplified view of images representative of aircraft 24 in level flight presented to operator 36 on display screen 28 with additional markings to facilitate control of the aircraft. With continued reference to FIG. 1, processor 34 may be further configured to receive inputs from operator 36 which correlate to a desired roll angle. In such embodiments, system 20 may further include an input device such as a cursor control device to received such inputs. In such embodiments, processor 34 is configured to provide commands to near-to-eye display unit 26 to display one or more desired attitude markers 48 at operator selected indicator markings 46. Desired attitude markers 48 may serve as a visual cue to assist operator 36 in maneuvering aircraft 24 into a roll having a desired angle.

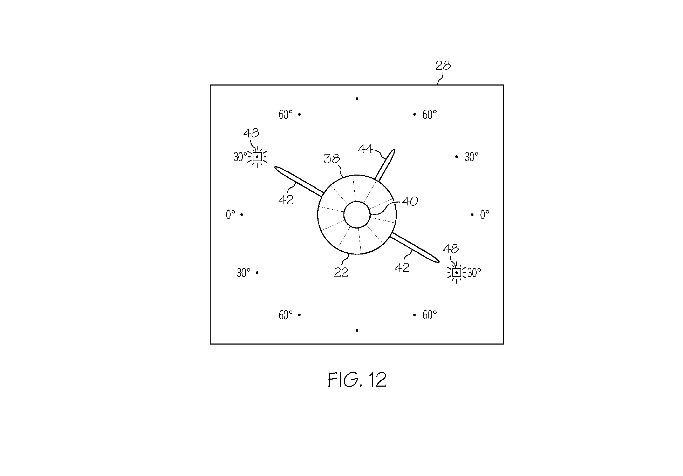

FIG. 12 is a simplified view of images representative of aircraft 24 in a banked turn presented to operator 36 on display screen 28 and additional markings to facilitate control of the aircraft. FIG. 12 is similar to FIG. 11, except that three-dimensional symbol 22 depicts aircraft 24 as having a roll angle. With additional reference to FIG. 1, in some embodiments, processor 34 may be configured to blink or flash or otherwise accentuate desired attitude markers 48 when aircraft 24 has attained the desired roll angle.

In other embodiments, indicator markings 46 may be used to denote the pitch angle of aircraft 24. In still other embodiments, indicator markings 46 may be used to denote the yaw angle of aircraft 24. In still other embodiments, any desired combination of pitch, roll, and yaw may be demonstrated by indicator markings 46.

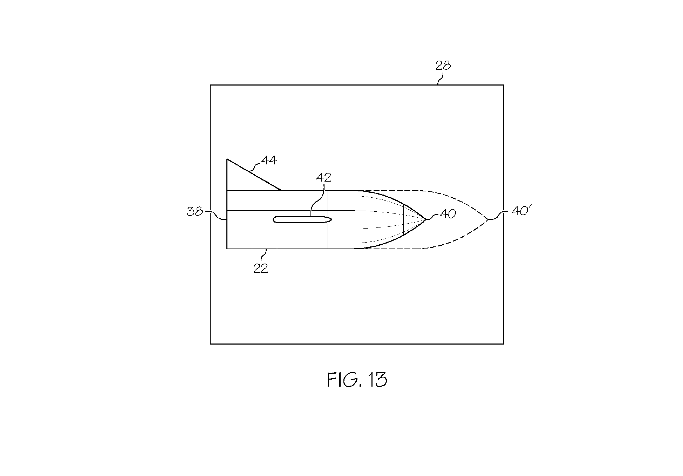

FIG. 13 is a simplified view of images representative of aircraft 24 flying at different velocities presented to operator 36 on a display screen 28. With additional reference to FIG. 1, in this embodiment, processor 34 is configured to obtain velocity information from velocity detection unit 32. Processor 34 is further configured to provide commands to near-to-eye display unit 26 to display three-dimensional symbol 22 in a manner that corresponds to the velocity of aircraft 24. In the illustrated example, a longitudinal length of three-dimensional symbol 22 increases and decreases as the velocity of aircraft 24 increases and decreases. For example, the front end 40 of three-dimensional symbol 22 illustrated in solid lines correlates to a relatively low velocity of aircraft 24 while the front end 40' illustrated in phantom lines correlates to a relatively high velocity of aircraft 24. In other embodiments, high and low velocities may be illustrated in other manners, including, but not limited to, increasing and reducing the size of the entire three-dimensional symbol 22 to correlate with increasing and decreasing velocities.

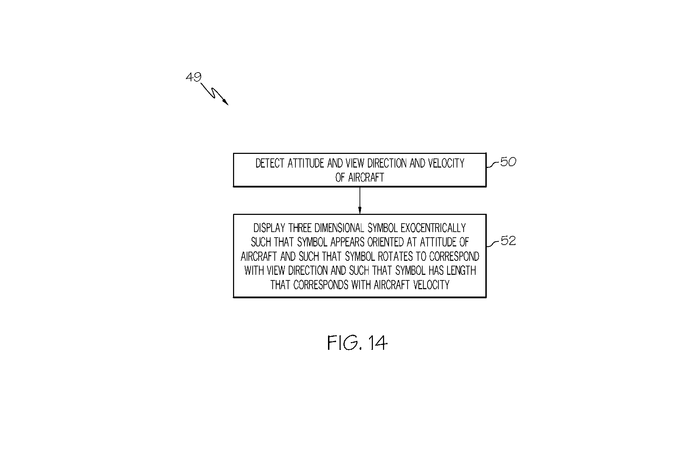

FIG. 14 is a flow diagram of a method 49 for displaying a symbol representative of an aircraft in flight, according to an embodiment. At block 50 of method 49, the attitude of an aircraft is detected, such as through the use of attitude detection unit. The view direction of an operator of the aircraft is detected as well, such as through the use of near-to-eye display unit 26. The velocity of the aircraft may also be detected, such as through the use of velocity detection unit 32.

At block 52, a three-dimensional symbol, such as three-dimensional symbol 22 is displayed. The three-dimensional symbol is displayed in an exocentric manner. The three-dimensional symbol is oriented on a display screen in a manner representing the same attitude as that of the aircraft employing the method. Furthermore, the three-dimensional symbol is displayed such that it rotates in a manner that correlates to the view direction of the operator. In some examples, the three-dimensional symbol may also be displayed as having a varying length that corresponds with aircraft velocity.

Accordingly, improved systems and methods have been provided that present an aircraft operator with a three dimensional symbol that rolls, pitches and yaws in a manner that corresponds with the roll, pitch, and yaw of the aircraft the operator is flying. Further, the three dimensional symbol rotates in a direction opposite to the rotation or pivotal motion of the operator's head such that the three dimensional symbol appears to have a substantially constant heading. Such a presentation is easily and quickly assimilated by the aircraft operator.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method (49) for displaying a symbol (22) representative of an aircraft (24) in flight, the method (49) comprising the steps of:
detecting (50) an attitude of the aircraft (24) and a view direction (27) of an operator of the aircraft (24), and
displaying (52) with a near-to-eye display unit (26) a three-dimensional symbol (22) in an exocentric manner wherein the three-dimensional symbol (22) appears to be oriented in a manner that represents the attitude of the aircraft (24) and wherein the three-dimensional symbol (22) rotates in a manner that corresponds with the view direction (27).

2. The method (49) of claim 1, wherein the displaying step (52) further includes displaying the three-dimensional symbol (22) such that a heading of the three-dimensional symbol (22) appears to remain substantially unchanged as the three-dimensional symbol (22) rotates.

3. The method (49) of claim 1, wherein the displaying step (52) further includes displaying a plurality of indicator markings (46) proximate the three-dimensional symbol (22) to depict the attitude of the aircraft (24).

4. The method (49) of claim 3, wherein the displaying step (52) further includes displaying a desired attitude marker (48) associated with one of the indicator markings (46).

5. The method (49) of claim 1, wherein the displaying step (52) further includes displaying the three-dimensional symbol (22) in a generally transparent manner.

6. The method (49) of claim 1, wherein the displaying step (52) further includes displaying the three-dimensional symbol (22) as a hollow wire frame.

7. The method (49) of claim **1,** wherein the detecting step (50) further includes detecting a velocity of the aircraft and wherein the displaying step (52) further includes displaying the three-dimensional symbol (22) in a manner that corresponds with the velocity of the aircraft.

8. The method (49) of claim 7, wherein the displaying step (52) further includes depicting the three-dimensional symbol (22) as having a length that corresponds to the velocity of the aircraft (24).

9. A system (20) for displaying a symbol (22) representative of an aircraft (24) in flight, the system comprising:
a near-to-eye display unit (26) having a display screen (28);
an attitude detection unit (30) configured to determine an attitude of the aircraft (24); and
a processor (34) communicatively connected to the near-to-eye display unit (26) and the attitude detection unit (30), the processor (34) being configured to obtain the attitude of the aircraft (24) from the attitude detection unit (30) and to provide commands to the near-to-eye display unit (26) to display a three-dimensional symbol (22) in an exocentric manner on the display screen (28) such that the three-dimensional symbol (22) appears to be oriented in a manner that is representative of the attitude of the aircraft (24).

10. A system (20) for displaying a symbol (22) representative of an aircraft (24) in flight, the system comprising:
a near-to-eye display unit (26) having a display screen (28), the near-to-eye display unit (26) configured to determine a view direction (27) of an operator (36) of the aircraft (24);
an attitude detection unit (30) configured to determine an attitude of the aircraft (24); and
a processor (34) communicatively connected to the near-to-eye display unit (26) and the attitude detection unit (30), the processor (34) configured to obtain the attitude of the aircraft (24) from the attitude detection unit (30), to obtain the view direction (27) from the near-to-eye display unit (26), and to provide commands to the near-to-eye unit (26) to display a three-dimensional symbol (22) in an exocentric manner on the display screen (28) such that the three-dimensional symbol (22) appears to be oriented in a manner that is representative of the attitude of the aircraft (24) and such that the three-dimensional symbol (22) rotates in a manner that corresponds with the view direction (27).
